# EUROPEAN PATENT APPLICATION

(11) **EP 4 701 052 A1**
(43) Date of publication of application: **25.02.2026**
(21) Application number: 24866994.7
(22) Date of filing: 01.07.2024
(51) Int. Cl.: H02K 5/20, H02K 1/20, H02K 1/32, H02K 5/18, H02K 1/30, H02K 9/19, H02K 9/06

(54) **PERMANENT MAGNET GENERATOR**

(30) Priority: 21.09.2023 CN 202311225532
(71) Applicant: Envision Energy Co., Ltd., Wuxi, Jiangsu 214443 (CN)
(72) Inventor: HUANG, Qian, Wuxi, Jiangsu 214443 (CN); ZHAO, Gang, Wuxi, Jiangsu 214443 (CN); CONG, Xiaojie, Wuxi, Jiangsu 214443 (CN); XU, Jianhua, Wuxi, Jiangsu 214443 (CN)
(74) Representative: Balder IP Law, S.L.
(86) International application number: PCT/CN2024/102891
(87) International publication number: WO 2025/060575

(57) **Abstract**

The present invention relates to a permanent magnet generator, comprising: a base (1); a stator (2) having an internal ventilation duct, wherein the outer circumference of a pressing ring of the stator (2) is in interference fit with the base (1) by means of shrink-fitting, thus creating a circumferential air duct between the base (1) and the outer circumference of a core of the stator (2); a rotor located inside the stator (2), the rotor being provided with a rotor magnetic pole (4) having a finned ventilation duct; and coolers (6) arranged at the top of the base (1). Compared with the prior art, the design of the present invention uses a novel air-water cooling method in which cooling water circulates outside of the generator, and air circulates inside the generator; the pressure head for circulation inside the generator is provided by means of the rotation of the rotor having the finned ventilation duct, while a top drive fan at the top of each cooler further provides kinetic energy for an internal circulation air path.

## Description

### TECHNICAL FIELD

The present disclosure relates to the technical field of generators, and in particular to a permanent magnet generator.

### BACKGROUND

Currently, permanent magnet generators in the industry generally use water jacket cooling for heat dissipation. However, the water jacket cooling has low heat dissipation efficiency. Moreover, it is difficult to prevent corrosion inside the water jacket. Thus, there is a risk of corrosion inside the water jacket and hidden danger of polluting the water-cooling liquid by corrosion. Furthermore, the water jacket base is complex to manufacture, resulting in low efficiency and high costs.

CN202020994956 discloses a rotor structure for permanent magnet wind generator. A rotor support structure is a common cylindrical structure with additional radial ventilation holes defined on the support. The rotor support structure has no complete ventilation duct loop, therefore can only provide surface heat dissipation but cannot form a passage, so that heat dissipation efficiency is low.

CN202020285284 discloses a heat dissipation structure for rotor magnets of a permanent magnet synchronous generator, but it does not redesign a cooling structure of the generator and has limited heat dissipation capacity.

CN201910300163 discloses a cooling air duct structure for permanent magnet poles of a rotor of a generator, in which an external cooling air duct is configured to cool the permanent magnets. An air guide tube is provided between a stator core and a base, a diversion duct is fixed to an inner wall of a driving end of the base, an air inlet of a cooler is hermetically docked with an air outlet defined on a cap of the driving end, and an air outlet of the cooler is hermetically docked with an air inlet of a cooling fan. However, this patent application does not improve the stator core.

### SUMMARY

The present disclosure aims to provide a permanent magnet generator to overcome at least one of the above drawbacks of the related technologies. The permanent magnet generator adopts air-water cooling to solve the heat dissipation problem of the permanent magnet generator, greatly improve the heat dissipation efficiency and avoid the hidden danger of corrosion inside the water jacket.

The purpose of the present disclosure can be achieved by the following technical solutions:
a permanent magnet generator including:
a base;
a stator having an internal ventilation duct, wherein an outer circumference of a clamping ring of the stator is in interference fit with the base using shrink fitting, to form a circumferential ventilation duct between the base and an outer circumference of a stator core; wherein a stator core structure having the internal ventilation duct, combined with modularized truss-type fixed rotors having finned ventilation ducts or a drum-type slotted magnetic structure, provides an effective internal heat dissipation air path for the generator;
a rotor arranged inside the stator, wherein the rotor is provided with rotor magnetic poles having finned ventilation ducts;
a cooler arranged on a top of the base.

In some embodiments, the rotor further includes a rotor support. The rotor magnetic poles are evenly arranged on an outer surface of the rotor support along a circumferential direction of the rotor support.

In some embodiments, the rotor magnetic pole includes rotor magnetic pole boxes, ventilation slot boards each provided with fins, and axial locking rods; wherein the rotor magnetic pole boxes and the ventilation slot boards are alternately arranged, and are fixed by the axial locking rods. The fins can cool an air pressure head for internal-circulation when the rotor rotates, to help to dissipate heat in the entire generator.

In some embodiments, the rotor magnetic pole includes multiple rotor magnetic pole boxes, preferably fifteen rotor magnetic pole boxes.

In some embodiments, the rotor support is a truss-type rotor support, including a central flange, crossbars evenly arranged around a perimeter of the central flange, and reinforcing ribs arranged between the central flange and the crossbars. The reinforcing ribs cannot only meet mounting strength requirements of the magnetic pole boxes, but also provide an unobstructed air flow path for the rotor to rotate. At the same time, the reinforcing ribs can act as a centrifugal fan, to provide additional pressure head for the rotor. The rotor support utilizes a truss-type structure with the reinforcing ribs, ensuring both rigidity and strength of the rotor support while ensuring rotor ventilation. The reinforcing ribs can also act as centrifugal fans to provide a large cooling airflow volume for the rotor.

In some embodiments, the rotor support is a drum-type slotted rotor support, including a center flange, a drum that sleeved on the center flange, and reinforcing ribs arranged between the center flange and the drum. openings are defined on the drum, and a number of the openings is equal to a number of the ventilation slot boards. The reinforcing ribs meet the mounting strength requirements of the magnetic pole boxes, and provide the unobstructed air flow path for the rotor to rotate. The reinforcing ribs can act as centrifugal fans to provide additional pressure head for the rotor.

In some embodiments, the ventilation ducts of the rotor magnetic poles are formed by the ventilation slot boards, to effectively provide an air path pressure head. The ventilation slot boards are preferably made of stainless steel, to avoid magnetic leakage.

In some embodiments, the permanent magnet generator further has a rear cover. The rear cover forms a sealed chamber with the base, and the sealed chamber is configured for cooling air to circulate inside the permanent magnet generator. Moreover, in some embodiments of the present disclosure, the permanent magnet generator utilizes a dual-circulation symmetrical air-water cooling design, combined with the modularized rotor magnetic pole structure having the finned ventilation ducts and the ventilation duct structure of the stator core, a high-flow circulation air path can be provided, which can improve heat exchange efficiency compared to a traditional water-jacket-cooled generator, thereby effectively addressing the heat dissipation problem of generators.

In some embodiments, the permanent magnet generator includes at least two coolers symmetrically arranged on a surface of the base. The at least two coolers are configured for hot air from the permanent magnet generator to flow into the at least two coolers for cooling. Moreover, the internal hot air flows through a ventilation duct of a rotor yoke, cooling both steel of a magnet, the stator core and windings. The dispersed and symmetrical arrangement of the coolers effectively and adequately cools large-diameter winding ends of the stator.

In some embodiments, the cooler is an air-water cooler having a top drive fan on a top of the cooler.

In some embodiments, the ventilation ducts are made of magnetic-isolating material, preferably magnetic-isolating stainless steel.

In some embodiments, the base is provided with an annular supporting vertical plate for supporting the stator.

Compared with the related technologies, the present disclosure has the following advantages:
(1) The permanent magnet generator provided in the present disclosure uses a new air-water cooling method in which cooling water circulates outside the generator, and air circulates inside the generator; the pressure head for circulation inside the generator is provided by means of the rotation of the rotor having finned ventilation ducts, and a top drive fan at a top of the cooler further provides kinetic energy for an internal-circulation air path.
(2) The permanent magnet generator provided in the present disclosure includes at least two coolers arranged evenly, so that the internal air paths are more evenly distributed, which can eliminate local hot spots and improve heat dissipation efficiency.
(3) The permanent magnet generator provided in the present disclosure utilizes a dual-circulation symmetrical air-water cooling design, combined with the modularized rotor magnetic pole structure having the finned ventilation ducts and the ventilation duct structure of the stator core, a high-flow internal circulation air path can be provided, which can improve heat exchange efficiency compared to a traditional water-jacket-cooled generator, thereby effectively addressing the heat dissipation problem of generators.
(4) The rotor support of the permanent magnet generator provided in the present disclosure adopts a truss-type structure with reinforcing ribs, or a drum-type slotted structure. Openings are defined on the drum, and the number of the openings is equal to the number of the ventilation slot boards. Compared with an outer circumference of a traditional cylindrical support, in addition to meeting fixing requirements of the split-type modularized rotor support, the overall material and weight of the rotor support can be reduced, which effectively saves raw material costs and ensures the requirements of ventilation and heat dissipation of the rotor. Moreover, split-type magnetic pole boxes are adopted, which are conducive to magnetizing in blocks before assembly, and to the assembly of the rotor magnetic pole boxes.

### BRIEF DESCRIPTION OF THE DRAWINGS

FIG. 1 is a front view of a permanent magnet generator in embodiments of the present disclosure;
FIG. 2 is a side view of a permanent magnet generator in embodiments of the present disclosure;
FIG. 3 is a schematic diagram of an internal air duct structure of a permanent magnet generator in embodiments of the present disclosure;
FIG. 4 is a schematic diagram of a rotor in embodiments of the present disclosure;
FIG. 5 is a schematic diagram of a rotor magnetic pole in embodiments of the present disclosure;
FIG. 6 is a schematic diagram of a rotor ventilation slot board in embodiments of the present disclosure;
FIG. 7 is a front view of a truss-type rotor support in embodiments of the present disclosure;
FIG. 8 is a side view of a truss-type rotor support in embodiments of the present disclosure;
FIG. 9 is a front view of a drum-type slotted rotor support in embodiments of the present disclosure;
FIG. 10 is a side view of a drum-type slotted rotor support in embodiments of the present disclosure;
FIG. 11 is a partial view of FIG. 1;

Reference numerals in the figures are as follows: 1-base; 2-stator; 3-rotor support; 4-rotor magnetic pole; 5-top drive fan; 6-cooler; 7-rear cover; 8-central flange; 9-crossbar; 10-reinforcing rib; 11-rotor magnetic pole box; 12-ventilation slot board; 13-axial locking rod; 14-ventilation slot bottom plate; 15-ventilation slot fin; 16-drum; 17-opening; 18-supporting vertical plate; a-circumferential air duct between base and stator core; b-stator ventilation duct; c-rotor magnetic pole ventilation duct; I-permanent magnet generator.

### DETAILED DESCRIPTION OF THE EMBODIMENTS

The present disclosure is described in detail below with reference to the accompanying drawings and specific embodiments. The embodiments are implemented based on the technical solution of the present disclosure, and a detailed implementation and specific operation process are provided, but the protection scope of the present disclosure is not limited to the following embodiments.

### Embodiment

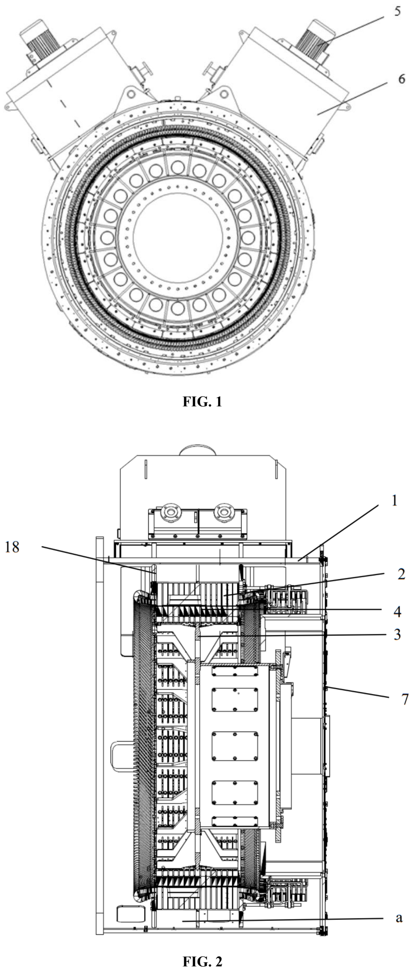

A permanent magnet generator, see FIGS. 1-11, includes:
a base 1;
a stator 2 having an internal ventilation duct, wherein an outer circumference of a clamping ring of the stator 2 is in interference fit with the base 1 using shrink fitting, to form a circumferential air duct between the base 1 and an outer circumference of a stator 2 core;
a rotor arranged inside the stator 2, wherein the rotor is provided with rotor magnetic poles 4 having finned ventilation ducts, wherein a rotor magnetic pole structure having the finned ventilation ducts is modularized, and due to a large diameter of the rotor, the fins can provide a very large air volume to an internal air duct after rotation; and
a cooler 6 arranged on a top of the base 1, wherein a stator core structure having the internal ventilation duct, combined with modularized truss-type fixed rotor magnetic poles 4 having the finned ventilation ducts, provides an effective internal heat dissipation air path for the generator, namely a circumferential air duct a between the base and the stator core.

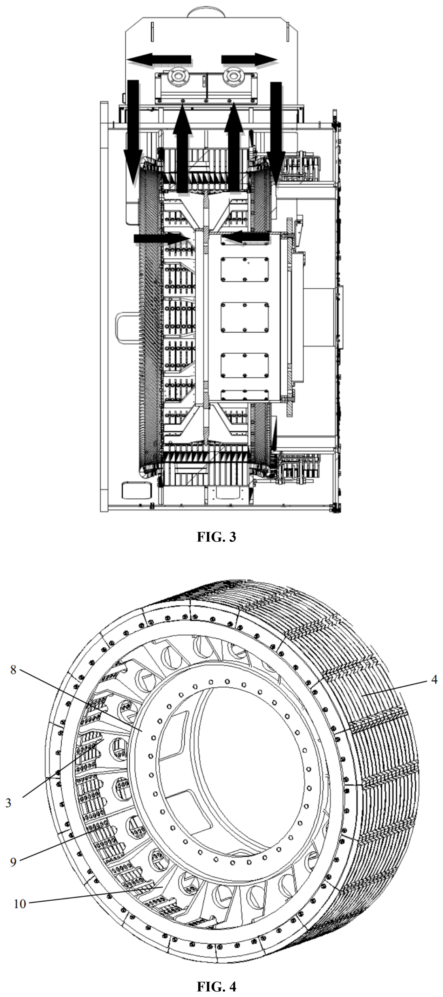

See FIG. 4 for details, the rotor further includes a rotor support 3. The rotor magnetic poles 4 are evenly arranged on an outer surface of the rotor support 3 along a circumferential direction of the rotor support 3.

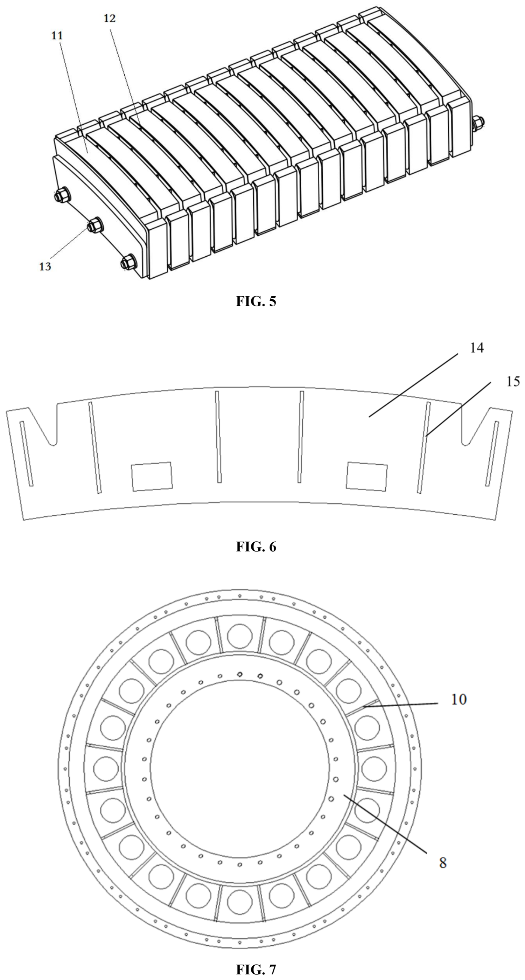

See FIG. 5 for details, the rotor magnetic pole 4 includes multiple rotor magnetic pole boxes 11, ventilation slot boards 12 each provided with fins, and axial locking rods 13. The rotor magnetic pole boxes 11 and the ventilation slot boards 12 are alternately arranged, and are fixed by the axial locking rods 13. The fins can cool an air pressure head for internal-circulation when the rotor rotates, to help to dissipate heat in the entire generator.

See FIG. 6 for details, each of the ventilation slot boards 12 includes a ventilation slot bottom plate 14, and ventilation slot fins 15 arranged on a surface of the ventilation slot bottom plate 14.

In this embodiment, the rotor support is a truss-type rotor support or a drum-type slotted rotor support.

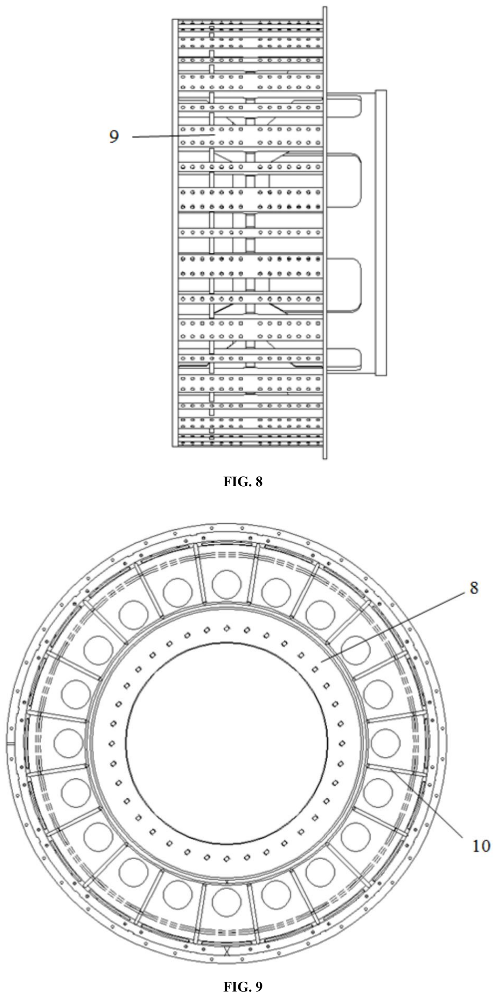

When the rotor support 3 is a truss-type rotor support, see FIGS. 7 and 8, it includes a central flange 8, crossbars 9 evenly arranged around a perimeter of the central flange 8, and reinforcing ribs 10 arranged between the central flange 8 and the crossbars 9. The reinforcing ribs 10 cannot only meet mounting strength requirements of the magnetic pole boxes, but also provide an unobstructed air flow path for the rotor to rotate. At the same time, the reinforcing ribs 10 can act as a centrifugal fan, to provide additional pressure head for the rotor. The rotor support 3 utilizes a truss-type structure with the reinforcing ribs, ensuring both rigidity and strength of the rotor support 3 while ensuring rotor ventilation. The reinforcing ribs 10 can also act as a centrifugal fan to provide a large cooling airflow volume for the rotor.

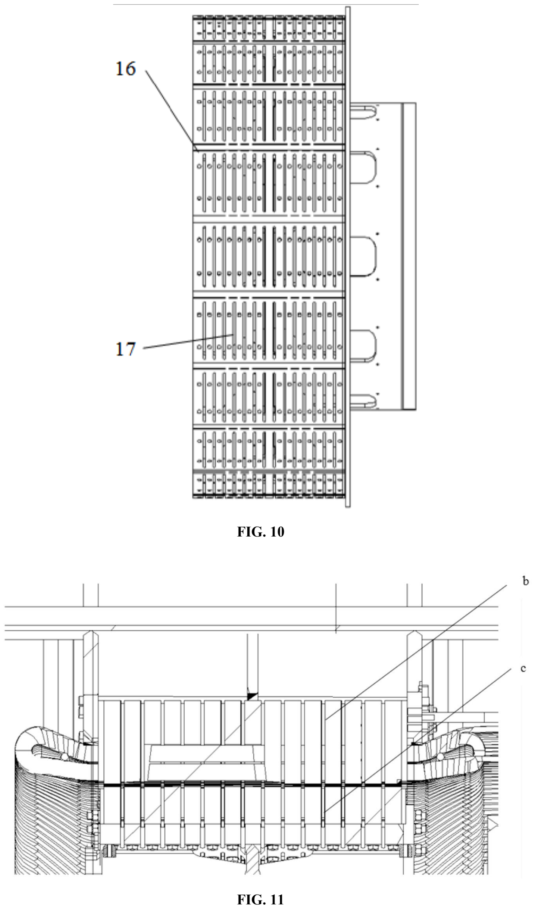

When the rotor support 3 is a drum-type slotted rotor support, see FIGS 9 and 10, it includes a center flange 8, a drum 16 sleeved on the center flange 8, and reinforcing ribs 10 arranged between the center flange 8 and the drum 16. Openings 17 are defined on the drum 16, and a number of the openings is equal to a number of the ventilation slot boards 12. The reinforcing ribs 10 meet the mounting strength requirements of the magnetic pole boxes, and provide the unobstructed air flow path for the rotor to rotate. The reinforcing ribs 10 can act as centrifugal fans to provide additional pressure head for the rotor.

See FIGS. 5 and 6 for details, the ventilation ducts of the rotor magnetic poles 4 are formed by the ventilation slot boards 12. to effectively provide an air path pressure head. The ventilation slot boards 12 are preferably made of stainless steel, to avoid magnetic leakage.

See FIGS. 1 and 2 for details, the permanent magnet generator further includes a rear cover 7. The rear cover forms a sealed chamber with the base 1, and the sealed chamber is configured for cooling air to circulate inside the permanent magnet generator. In some embodiments, the permanent magnet generator utilizes a dual-circulation symmetrical air-water cooling design, combined with the modularized rotor magnetic pole structure having the finned ventilation ducts and the ventilation duct structure of the stator core, a high-flow internal circulation air path can be provided, which can improve heat exchange efficiency compared to a traditional water-jacket-cooled generator, thereby effectively addressing the heat dissipation problem of generators.

See FIGS. 1 and 2 for details, the permanent magnet generator includes at least two coolers 6 evenly arranged on a surface of the base 1. The at least two coolers are configured for hot air from the permanent magnet generator to flow into the at least two coolers 6 for cooling. Moreover, the hot air inside the permanent magnet generator flows through a ventilation duct of a rotor yoke, cooling both steel of a magnet, the stator core and windings. The dispersed and symmetrical arrangement of the coolers effectively and adequately cools large-diameter winding ends of the stator.

See FIG. 2 for details, the base is provided with an annular supporting vertical plate 18 for supporting the stator 2.

In some embodiments, the cooler 6 is an air-water cooler having a top drive fan 5 provided on a top of the cooler.

### Implementation

In the embodiments, cooling water circulates outside the generator, and air circulates inside the generator. The schematic diagram of the air path structure is shown in FIG. 2.

During use, the provided base 1 of the permanent magnet generator in the embodiments has an annular supporting vertical plate 18, the base 1 is in interference fit with an outer circumference of a pressure ring of the stator 2 with the ventilation duct using shrink fitting, to form a circumferential air duct between the base 1 and an outer circumference of a core of the stator. The pressure head for air circulation inside the generator is provided by means of the rotation of the rotor magnetic poles 4 having the finned ventilation ducts, and a top drive fan 5 at a top of the cooler 6 further provides kinetic energy for an internal-circulation air path. The top cooler 5includes two symmetrically arranged coolers, so that the internal air paths are more evenly distributed, which can eliminate local hot spots and improve heat dissipation efficiency.

The above descriptions are only preferred embodiments of the present disclosure, and are not intended to limit the present disclosure in any other manner. Any person skilled in the art may utilize the above-disclosed technical content to modify or improve the present disclosure into equivalent embodiments. However, any simple modifications, equivalent variations, and improvements to the above embodiments that do not depart from the technical content of the present disclosure and are based on the technical essence of the present disclosure remain within the scope of protection of the present disclosure.

## Claims

1. A permanent magnet generator, **characterized by** comprising:
a base;
a stator having an internal ventilation duct, wherein an outer circumference of a clamping ring of the stator is in interference fit with the base using shrink fitting to form a circumferential ventilation duct between the base and an outer circumference of a stator core;
a rotor arranged inside the stator, wherein the rotor is provided with rotor magnetic poles having ventilation ducts; and
a cooler arranged on a top of the base.

2. The permanent magnet generator according to claim 1, wherein the rotor further includes a rotor support, and the rotor magnetic poles are evenly arranged on an outer surface of the rotor support along a circumferential direction of the rotor support.

3. The permanent magnet generator according to claim 2, wherein the rotor magnetic poles include rotor magnetic pole boxes, ventilation slot boards each provided with fins, and axial locking rods; and
wherein the rotor magnetic pole boxes and the ventilation slot boards are alternately arranged and are fixed by the axial locking rods.

4. The permanent magnet generator according to claim 3, wherein the rotor support is a truss-type rotor support, including a central flange, crossbars evenly arranged along a perimeter of the central flange, and reinforcing ribs arranged between the central flange and the crossbars.

5. The permanent magnet generator according to claim 3, wherein the rotor support is a drum-type slotted rotor support, including a central flange, a drum sleeved on the center flange, and reinforcing ribs arranged between the center flange and the drum; and
wherein openings are defined on the drum, and a number of the openings is equal to a number of the ventilation slot boards.

6. The permanent magnet generator according to claim 3, wherein the ventilation ducts of the rotor magnetic poles are formed by the ventilation slot boards.

7. The permanent magnet generator according to claim 1, further including a rear cover, wherein the rear cover, wherein the rear cover forms a sealed chamber with the base, and the sealed chamber is configured for cooling air to circulate inside the permanent magnet generator.

8. The permanent magnet generator according to claim 1, including at least two coolers symmetrically arranged on a surface of the base, wherein the at least two coolers are configured for hot air from the permanent magnet generator to flow into the at least two coolers for cooling.

9. The permanent magnet generator according to claim 1, wherein the cooler is an air-water cooler having a top drive fan provided on a top of the cooler.

10. The permanent magnet generator according to claim 1, wherein the base is provided with an annular supporting vertical plate for supporting the stator.
